# EUROPEAN PATENT APPLICATION

(11) **EP 0 812 544 A2**
(43) Date of publication of application: **17.12.1997**
(21) Application number: 97109590.6
(22) Date of filing: 12.06.1997
(51) Int. Cl.: A23C 9/152, A23C 19/076, A23C 9/13, A23G 9/20

(54) **Method for preparing dairy products having increased shelf-life**

(30) Priority: 14.06.1996 US 663460
(71) Applicant: PRAXAIR TECHNOLOGY, INC., Danbury, CT 06810-5113 (US)
(72) Inventor: Henzler, Gregory William, E. Amherst, New York 14051 (US); Paradis, Armand Jude, Naperville, Ill 60540 (US)
(74) Representative: Schwan, Gerhard, Dipl.-Ing.

(57) **Abstract**

A method for preparing dairy products having increased shelf-life by incorporating carbon dioxide into such products, comprising contacting a fluid milk fraction of a dairy foodstuff with carbon dioxide, mixing the fluid milk fraction and carbon dioxide into a solution, and subjecting the solution to conditions sufficient to reach a steady state between the fluid milk fraction and dissolved carbon dioxide. The invention is adapted for consumer dairy products of a wide variety, such as milk, buttermilk, yogurt, sour cream, cottage cheese, ricotta cheese, other soft, semi-soft and hard cheeses, ice cream mixes, and the like.

## Description

### FIELD OF THE INVENTION

This invention relates generally to the use of carbon dioxide in the processing of dairy products to increase their refrigerated shelf-life. More specifically, the invention is directed to a method for incorporating carbon dioxide into dairy products. The method of the present invention provides dairy products having increased shelf-life without compromising on product appearance and taste.

### BACKGROUND OF THE INVENTION

It is well known in the dairy industry that dairy products have a limited shelf-life. "Shelf-life" of dairy products is defined as the time period between manufacture or processing and when the product is considered unsuitable for consumption by the consumer. Dairy products are usually considered unsuitable for consumption due to the presence of flavor defects, changes in physical appearance, or the appearance of yeast or molds.

One of the major causes of flavor defects, changes in physical appearance, and the appearance of yeast or molds, in dairy products is microbial activity. Fresh milk is a complex biological fluid comprising fats, proteins, mineral, vitamins, enzymes, sugar, and various microorganisms. Although fresh milk contains very few microorganisms, additional microbes may enter fresh milk due to environmental factors including contamination during transport, storage, and processing.

The microorganisms present in fresh milk will ultimately lead to the spoilage of the milk, as well as dairy products produced from the milk. This is because certain bacteria are found in milk, while other bacteria produce milk-degrading enzymes, both of which lead to spoilage of milk and dairy products due to their biochemical activity.

These microorganisms will grow (some even under low temperature conditions), increasing the counts of bacteria and the amount of enzymes present in dairy products, unless removed, destroyed or controlled. The presence and growth of microorganisms in fresh milk and dairy products are believed to have a direct correlation to the period of time during which dairy products are suitable for consumption, i.e., the shelf-life. In fact, various countries have established ratings for fresh milk based on bacterial counts. Milk and dairy products with bacterial counts above the prescribed limit are considered unsuitable for consumption.

Microorganisms in milk and dairy products include various types of bacteria which, among other things, lead to its spoilage. In pasteurized milk, spoilage is often exhibited by a separation of the milk associated with a sour smell; in cottage cheese, spoilage is often exhibited by a "wheying-off " effect where a milky white layer separates from the solids portion of the product, and may futher be associated with the growth of yeast or mold on the inner seal of packaging; and in ice cream, spoilage is often exhibited by an off-flavor in the product.

Factors which affect shelf-life of dairy products include:
(1) the presence of thermoduric bacteria in raw milk, which are able to grow under refrigeration;
(2) the presence of psychrotrophic bacteria, as well as heat-stable enzymes produced by such bacteria, in dairy foodstuffs and products, which are also able to grow under refrigeration and eventually cause spoilage as a result of their biochemical activity;
(3) storage temperature, that when elevated increases the rate of growth of bacteria;
(4) the action of lipase (an enzyme) on damaged fat globules in raw milk, that can result in rancid flavors in the end products; and
(5) excessive temperatures (> 75°C) during pasteurization, which can germinate microbial spores present in fresh milk that are able to grow at low temperatures.

It has, therefore, been recognized that it is important to limit microbial growth in milk as early in its processing as possible. This will limit the production of enzymes that degrade milk and dairy products, resulting in shelf-life extension.

In the industry, bacterial growth in fresh milk has traditionally been controlled by maintaining the milk in a low temperature environment during storage and transportation until the milk is processed at, for example, a dairy plant. Early in the processing of the milk, bacterial growth is further controlled by substantially destroying or removing existing bacteria. Traditional means of destroying such bacteria have focused on heat treatment using the pasteurization process. Ultrafiltration techniques for removing such bacterial contamination, without heat treatment, have also been developed.

However, not all psychrotrophic bacteria are dealt with by pasteurization (or ultrafiltration) and are problematic since they continue to grow in fluid milk and dairy products throughout standard dairy operations. Furthermore, following pasteurization, the fluid milk and/or dairy products are frequently maintained in holding tanks for long periods of time between processing steps and prior to packaging, and are thereby subject to further bacterial growth. Moreoever, psychrotrophic bacteria are known to produce heat-stable proteolytic and lipolytic enzymes that are not destroyed during pasteurization. These enzymes break down proteins and fat in dairy products, during and after processing, eventually causing their spoilage.

In an effort to extend the shelf-life of dairy products by controlling bacterial growth, the dairy industry initially focused on higher heat treatment of fluid milk, using a process commonly referred to as "ultra-pasteurization". Ultra-pasteurization (also called UHT, ultraheat, or ultrahigh temperature treatment) uses a substantially higher temperature range (generally about 130 - 150 °C) for pasteurization that is believed to destroy all psychrotrophic bacteria, and can provide for a shelf-life of up to 5 months. Ultra-pasteurization has the disadvantage, due to the high heat, of changing the taste and appearance of treated fluid milk, giving the milk a cooked or burnt flavor and a slightly brown or caramelized appearance. Although ultra-pasteurization can result in an increase in shelf-life, taste and appearance are sacrificed. Accordingly, ultra-pasteurized dairy products have not been widely accepted by the general public due to this change in taste and appearance.

Alternative efforts have focused on improving packaging as a means of increasing the shelf-life of dairy products. Modified atmosphere packaging (or MAP), using various types of barrier materials, have been developed for use with various food products. Containers with inner layers and overwrap, made of metal foil, mylar film, polyethylene, and polyvinylidene chloride wrap, are presently being used in various segments of the food industry for this purpose.

The "fresh" pasta available in the refrigerated section of supermarkets uses such MAP packaging. Carbon dioxide has also been added to the headspace of these containers to inhibit oxidation. However, these packages commonly exhibit a bulging or "doming" effect, apparently due to the amount of gas in the headspace. Although this may not be of concern with respect to "fresh" pasta, it is believed that consumers of dairy products would consider such "doming" to be indicative of substandard quality. It is also unclear how this excess gas in the headspace may affect the taste of these products, since these foods are normally cooked before consumption.

Nonetheless, the dairy industry has begun to use a form of MAP with better barrier packaging materials, especially metal foil and mylar film, for inner seals. Testing has also shown that CO₂ may be added to the headspace of such MAP containers resulting somewhat longer shelf-life. Maniar et al. have reported that the shelf-life of cottage cheese was extended from an expected shelf-life of 21 days to about 28 days, where the containers were packaged using MAP, with CO₂ added to the container headspace, and stored at 4 °C. Maniar, A.B., Marcy, J.E., Bishop, J.R., and Duncan, S.E., *Modified Atmosphere Packaging to Maintain Direct-Set Cottage Cheese Quality*, J. Food Sci., 1991, vol. 59, no. 6, pp. 1305-1308. However, results, to date, have not shown substantial increase in shelf-life, and further have not shown the effects on product taste and appearance.

Investigators are also studying the direct use of carbon dioxide in dairy products to increase shelf-life. Carbon dioxide is known to inhibit the growth of Gram-negative bacteria including the psychrotrophic bacteria commonly found in fresh fluid milk.

It is believed, and research in this area suggests, that carbon dioxide may be dissolved into milk to inhibit bacterial growth. In unprocessed milk, King and Mabbitt reported an increase in the preservation of unpasteurized farm milk from about 3 days to about 6 days, by the addition of carbon dioxide at a concentration of 30 mmol/L, stored at 7 °C. King, J.S., and Mabbitt, L.A., *The Use of Carbon Dioxide for the Preservation of Milk*, Soc. Appl. Bacteriol. Tech. Ser., 1987, vol. 22, pp. 35-43. King and Mabbitt concluded that their experiments demonstrated that the addition of CO₂ to refrigerated milk could double the storage time of unprocessed milk without spoilage by psychrotrophs.

However, such studies have addressed only the use of CO₂ with unprocessed milk. Furthermore, King and Mabbitt note that the CO₂ should be removed from the milk by heat and slight agitation to be suitable for consumption. To the extent that CO₂ is removed by heat and agitation, it is believed that the CO₂ would be removed by pasteurization and homogenization in standard dairy operations, thereby eliminating its effect as an inhibitor of bacterial growth following pasteurization. But should the CO₂ remain in the milk, and if it is necessary to remove the CO₂ by heating and agitation prior to consumption, it is believed that such a carbonated product would not be suitable for use in packaged dairy products.

The use of carbon dioxide within consummable fluid products has been generally limited to carbonated beverages, such as soft drinks and seltzer waters. Such levels of carbonation, however, are not believed to be suitable for dairy products. Although, carbonated milk beverages have been prepared, such beverages do not have the taste or appearance of ordinary dairy products. As disclosed in U.S. Patent No. 4,804,552, carbonated liquid dairy products are prepared so that the taste and mouth feel of the carbonated dairy product is no longer that of the uncarbonated dairy product. The carbonation generally lowers the pH of carbonated beverages, resulting in a somewhat acidic flavor. In addition, such beverages are known for exhibiting an effervescent appearance.

It is believed that carbon dioxide has not been generally used in dairy products since its addition can result in acidic off-flavors (since carbon dioxide is a weak acid) and effervescence (due to the carbonation), neither of which are acceptable to the consumer.

Nonetheless, the use of carbon dioxide within dairy products appears to be an attractive alternative to previously used methods to increase shelf-life. Recent studies have suggested that carbon dioxide may be added to dairy products at relatively low levels to achieve substantial shelf-life extension without adversely affecting appearance. Chen and Hotchkiss have reported that CO₂ dissolved into the cream dressing of cottage cheese prior to blending with the curd, and packaging in high barrier containers, can inhibit the growth of Gram-negative bacteria. Chen, J.H., and Hotchkiss, J.H., *Effect of Dissolved Carbon Dioxide on the Growth of Psychrotrophic Organisms in Cottage Cheese*, J. Dairy Sci., 1991, vol. 74, no. 9, pp. 2941-2945. Chen and Hotchkiss' tests were conducted on 2% fat cottage cheese having an initial inoculated bacterial count of approximately 10³ cfu/g, stored in sealed glass jars, with 35% to 45% CO₂ (in air) in the headspace of the jars, at a temperature of 7 °C. Chen and Hotchkiss reported that carbonated samples showed no bacterial growth for 30 days, while cottage cheese packaged without dissolved CO₂ had 10⁴-fold more colony-forming units; the carbonated samples were also reported to have maintained a fresh appearance for 60 days. Chen and Hotchkiss did not, however, measure the amount of CO₂ dissolved into the cream dressing or cottage cheese, product pH, or whether the carbonated cottage cheese would be acceptable to consumers on the basis of taste.

Further research by Hotchkiss has suggested that cottage cheese may withstand spoilage microorganism growth of up to 60 days when CO₂ is added at a level of 300 ppm to the cottage cheese and packaged in high-barrier film shrink-wrapped polystyrene tubs (or high-barrier tubs secured with a foil/polyolefin laminant seal). *Commitment to Cottage Cheese*, Dairy Foods, April 1996, p. 29. The process for obtaining such results is described as injecting carbon dioxide directly into the cream dressing of the cottage cheese before curd addition and prior to packaging; CO₂ is injected into the dressing in the process line between the dressing (holding) tank and then blended and packaged.

In such a process, however, where carbon dioxide is added at the last stage before packaging, microbial action has already degraded the dairy product, to a certain extent, between the time of pasteurization and packaging. Furthermore, it is believed that the packaged product will necessarily be subject to off-gassing of undissolved carbon dioxide entrained in the product and/or CO₂ that has not reached a steady state with the cottage cheese. This could provide for acidic off-flavors, affecting consumer acceptance. In addition, excess gas in the headspace of containers could lead to a "doming" effect in some packages, raising product quality issues.

Moreover, no results have yet been shown on consumer acceptance of such products on the basis of taste and appearance. If the CO₂ imparts an acidic taste to the cottage cheese or if the cottage cheese appears to be "bubbly" or effervescent, it will not be acceptable to consumers. Such effects are likely to occur when the amount of CO₂ exceeds a threshold level, either dissolved in the cottage cheese or present in the headspace of the container.

Although it is believed that these thresholds may be determined by experimentation, a process has yet to be developed that will maintain specified levels of CO₂ in the product and in the headspace of the container. Furthermore, despite all past efforts to increase the shelf-life of dairy products, a process has yet to be developed that will prepare dairy products having increased shelf-life that are acceptable to the consumer with respect to taste and appearance.

### OBJECTS OF THE INVENTION

It is therefore an object of the present invention to provide means for increasing the shelf-life of dairy products without adversely affecting consumer acceptance with respect to taste and appearance.

It is a further object of this invention to provide a method of preparing dairy products with carbon dioxide which have increased shelf-life.

It is yet another object of this invention to provide a method of preparing dairy products which control the growth of microorganisms, especially Gram-negative bacteria.

### SUMMARY OF THE INVENTION

These objects are believed to be accomplished by the present invention. The present invention is directed to a method for preparing dairy products having increased shelf-life by incorporating carbon dioxide into such products. The present invention is adapted for consumer dairy products of a wide variety, including, but not limited to, milk, buttermilk, yogurt, sour cream, cottage cheese, ricotta cheese, other soft, semi-soft and hard cheeses, ice cream mixes, and the like. The method of the present invention is contemplated for use within a standard dairy processing system, as well as an independent process.

The average standard shelf-lives for several dairy products are listed below.

| Product | Average Standard Shelf-Life |
|---|---|
| Fluid Milk | 17 days |
| Cottage Cheese | 22 days |
| Ricotta Cheese | 30 days |
| Ice Cream Mix | 18 days |

It is expected that the method of the present invention will at least double the average shelf-life for most dairy products.

Generally, in accordance with the method of the present invention, a fluid milk fraction of a dairy foodstuff is treated with carbon dioxide. "Dairy foodstuff" as used herein is meant to indicate the dairy consummable during processing, including liquid and solids contained therein, beginning with fresh milk and ending with the product prior to packaging. By "fluid milk fraction", we mean that portion of a dairy foodstuff that is in a fluid (i.e., liquid or semi-liquid) state. The fluid milk fraction can be any portion of the dairy foodstuff, up to and including 100 percent where the dairy foodstuff is entirely fluid.

More specifically, the present invention is directed to a method for preparing dairy products, prior to packaging, comprising contacting a fluid milk fraction of a dairy foodstuff with carbon dioxide, mixing the fluid milk fraction and carbon dioxide into a solution, and subjecting the solution to conditions sufficient to reach a "steady state" between the fluid milk fraction and dissolved carbon dioxide. By "steady state", we mean a concentration of carbon dioxide in fluid milk that is relatively stable to minor agitation and fluctuations in, for example, temperature or pressure that dairy products may normally be subject to during blending, packaging, storage, shipment, and delivery to consumers.

The present invention may be conducted as part of a dairy processing plant or as an independent process. The instant invention may also be optionally conducted in a carbon dioxide environment, wherein the entire process, whether within a dairy plant or independent process, is conducted in a carbon dioxide environment or any or all process equipment are blanketed in carbon dioxide.

### BRIEF DESCRIPTION OF THE DRAWING(S)

Other objects, features and advantages will occur to those skilled in the art from the following description of preferred embodiments and the accompanying drawings, in which:
Fig. 1 is a process flow diagram of an embodiment of the invention within a dairy plant for a completely fluid dairy foodstuff; and
Fig. 2 is a process flow diagram of an embodiment of the invention within a dairy plant for a dairy foodstuff, a portion of which is fluid and a portion of which is solid; and
Fig. 3 is a process flow diagram of a closed creamer cottage cheese processing system in a dairy plant operation; and
Fig. 4 is a process flow diagram of an embodiment of the invention within an open vat cottage cheese processing system in a dairy plant operation.

### DETAILED DESCRIPTION OF THE INVENTION

The inventors of the present invention have realized that the most important factors in increasing shelf-life of milk and dairy products is providing a means to inhibit bacterial growth as early in dairy processing as possible and a means to maintain such inhibition throughout the processing stages and during storage until the product reaches the consumer. The inventors determined that this could be accomplished by using carbon dioxide in the processing of milk and dairy products, especially by incorporating the carbon dioxide into the milk and dairy products.

The problem, however, was to develop a method that would provide for the maximum level of bacterial inhibition, while also being suitable for commercial application. It is understood that in the processing of milk and dairy products, the foodstuffs are subject to various destabilizing forces including heat, pressure and high shear conditions throughout their processing. Prior art methods sought to deal with these forces by adding carbon dioxide at the last stage of processing, thereby minimizing the possibility of destabilization, followed by barrier packaging.

The present inventors have discovered a means for adding carbon dioxide to milk and dairy products early in their processing. By the present method, carbon dioxide may be added at any time.

It has been discovered that dissolving carbon dioxide into milk and dairy products in one step, followed by a step that allows for the carbon dioxide to reach a "steady state" of equilibrium with the fluid portion of the milk or dairy product results in an uniform and stable solution.

In addition to the objects stated herein, the use of the present method may preclude the need for modified atmosphere packaging (MAP), and may further result in the reduction and/or elimination of the use of preservatives. It is contemplated that since the carbon dioxide is stably incorporated into the dairy product and provides for inhibition of bacterial activity, high barrier packaging and natural and/or artificial preservatives may be unneccessary. This would provide for cost savings in the preparation of such products.

Although these steps may be done at any time, it is preferred that they be done immediately following pasteurization and homogenization, when bacterial growth is believed to be at its minimum. This will advantageously provide for maximum inhibition of bacterial growth.

This is also convenient for the processing of many dairy products that normally hold the fluid milk fraction in a holding or surge tank following pasteurization and homogenization until final processing. Since carbon dioxide has already been added to the fluid milk fraction, bacterial growth and enzymatic activity are advantageously inhibited during storage and further processing.

It is contemplated that during the "steady state" step, that the fluid milk fraction will be maintained under a pressurized carbon dioxide blanket. In a preferred embodiment, all process equipment is maintained under a pressurized carbon dioxide blanket. Alternatively, the entire process system, or discrete segments thereof, may be contained in a carbon dioxide environment.

The method of the present invention comprises the steps of, contacting a fluid milk fraction of a dairy foodstuff with carbon dioxide, mixing the fluid milk fraction and carbon dioxide into a solution, and subjecting the solution to conditions sufficient to reach a steady state between the fluid milk fraction and dissolved carbon dioxide.

The fluid milk fraction is treated by contacting the milk with carbon dioxide, and mixing to dissolve the carbon dioxide in the milk. Means of contact may include, but are not limited to, injection, sparging, and bubbling. Contact may be made in any suitable medium that would be apparent to one of skill in the art including in-line process stream, holding tank, process vessel, and the like.

The carbon dioxide is mixed and dissolved into the fluid milk fraction in a predetermined amount, and in a manner consistent with the contacting stage, including but not limited to, pressurized injection or sparging into a process stream or vessel, or bubbling through a holding tank. Other mixing means will be apparent to those of skill in the art.

The rate of addition of carbon dioxide is contemplated to be between about 0.1 lbs. to about 6.0 lbs. CO₂ per 1000 lbs. of the fluid milk fraction. It is further contemplated that different dairy products may use differing amounts of carbon dioxide, within this range, in the process of the present invention. Preferred ranges of the rate of CO₂ addition per 1000 lbs. of the fluid milk fraction are provided, as follows, for several dairy products.

| Product | Preferred | Most Preferred |
|---|---|---|
| Milk | about 0.1-1.5 lbs. | about 0.3-0.6 lbs. |
| Cottage Cheese | about 2.0-5.0 lbs. | about 3.0-4.0 lbs. |
| Ricotta Cheese | about 0.5-1.5 lbs. | about 0.6-1.3 lbs. |
| Ice Cream Mixes | about 0.1-1.5 lbs. | about 0.3-0.6 lbs. |

After the carbon dioxide has been dissolved into the fluid milk fraction, the solution is placed under conditions sufficient to reach a "steady state" between the carbon dioxide and the fluid milk liquid phase. This may be accomplished by transferring the solution of milk and carbon dioxide to a vessel (e.g., holding or surge tank), and maintaining under suitable conditions and for a sufficient period of time to reach steady state. As contemplated, the holding vessel is pressurized under a carbon dioxide blanket. Persons of skill in the art will recognize other suitable means and conditions by which to achieve steady state of the solution.

It is contemplated that the vessel will be maintained at a temperature of about 35°F to about 50°F, and preferably at about 37°F to about 45°F. The holding time is contemplated to be between at least about 0.5 hours, and preferably at least about 1.0 hours.

It is also contemplated that the CO₂ blanket will be pressurized at about 2 to about 6 inches water column, and preferably at about 3 to 5 inches water column. As contemplated, any single step, or combination thereof, may be conducted under a CO₂ blanket, or the the entire method may be within a CO₂ environment.

The aforementioned method may be used for the preparation of any commercial dairy product. It will be appreciated, however, that the processing parameters may differ slightly for differing dairy products, but that the overall method will remain the same.

Several embodiments of the present invention in dairy processes are shown in the figures and are generally described as follows. However it should be recognized that these are provided for illustration purposes only and are not intended to be limiting in any way.

Specific features of the invention are shown in one or more of the drawings for convenience only, as each feature may be combined with other features in accordance with the invention. Alternative embodiments will be recognized by those skilled in the art and are intended to be included within the scope of the claims.

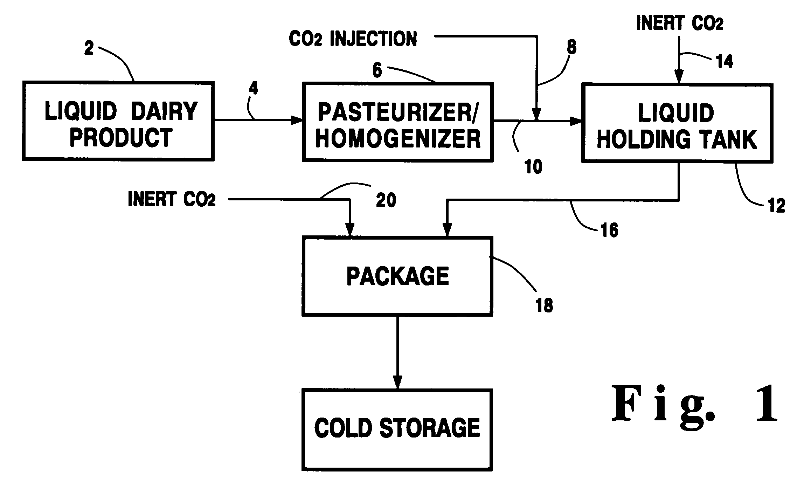

A process for preparing a fluid dairy foodstuff (e.g., fluid milk or fluid milk product) is generally shown in Fig. 1. As shown, the fluid milk is taken from storage vessel 2 and fed through line 4 to pasteurizer/homogenizer 6. Upon leaving the pasteurizer/homogenizer 6, CO₂ is injected via injector 8 into fluid milk line 10, where the CO₂ is mixed and dissolved into the milk by action of the injector in the process stream. The milk/CO₂ solution flows from fluid milk line 10 into holding tank 12, where the solution is maintained under conditions suitable to achieve steady state between the fluid milk and the dissolved CO₂. Upon reaching steady state, the milk/CO₂ solution is transferred via transfer line 16 to packaging system 18. During packaging, CO₂ may be added to the headspace of the milk container. Before and subsequent to entering holding tank 12 and packaging system 18, CO₂ is added via lines 14 and 20, respectively, to purge and blanket the tank and packaging system. Following packaging, containers of milk are transferred for cold storage or shipment.

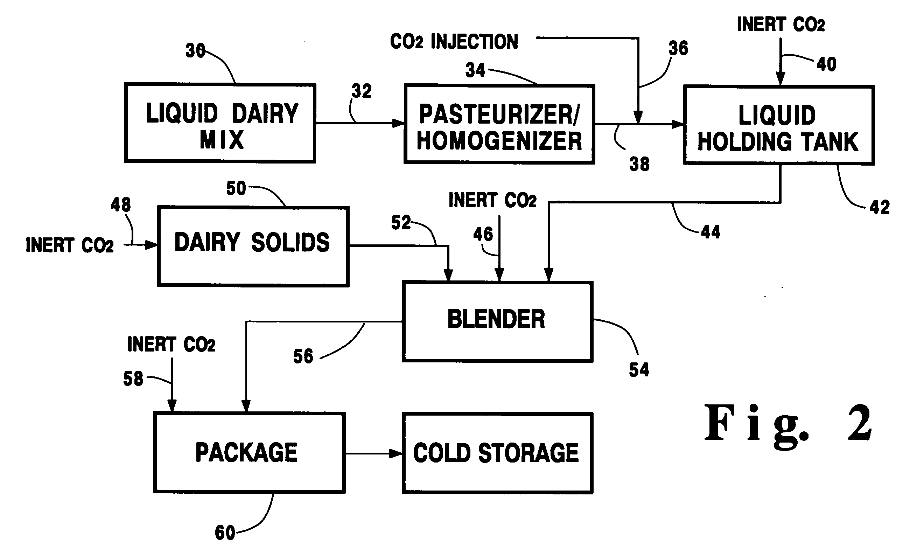

A process for preparing a dairy product which includes dairy solids is generally shown in Fig. 2. As shown, the liquid dairy mix is taken from storage vessel 30 and fed through line 32 to pasteurizer/homogenizer 34. Upon leaving the pasteurizer/homogenizer 34, CO₂ is injected via injector 36 into fluid dairy mix line 38, where the CO₂ is mixed and dissolved into the fluid dairy mix by action of the injector in the process stream. The dairy/CO₂ solution flows from line 38 into holding tank 42, where the solution is maintained under conditions suitable to achieve steady state between the fluid dairy mix and the dissolved CO₂. Upon reaching steady state, the dairy/CO₂ solution is transferred via transfer line 44 to blender 54. Concurrently, dairy solids in holding tank 50 are transferred via transfer line 52 to blender 54. The dairy/CO₂ solution is then blended with the dairy solids, and then transferred via output line 56 to packaging system 60. During packaging, CO₂ may be added to the headspace of the dairy product container. Before and subsequent to entering holding tank 42, holding tank 50, blender 54 and packaging system 60, CO₂ is added via lines 40, 48, 46 and 58, respectively, to purge and blanket each of the two tanks, blender and packaging system. Following packaging, containers of the dairy product are transferred for cold storage or shipment.

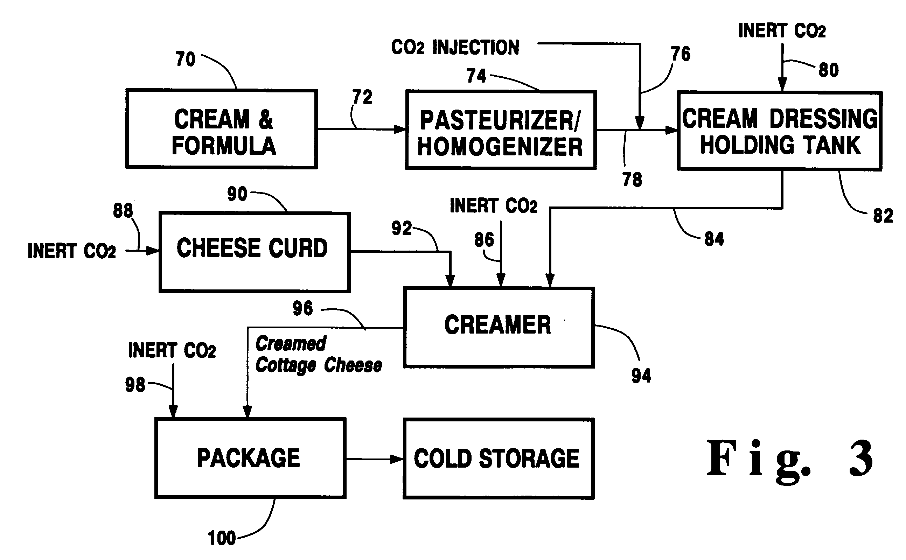

The preparation of cottage cheese in a closed creamer system, as shown in Fig. 3, follows that as described above for a dairy product with dairy solids. In a closed creamer system, cream and formula 70 (i.e., cream dressing) are substituted for the liquid dairy mix, and cheese curd 90 for the dairy solids. The cream and curd are blended in the creamer 94 producing creamed cottage cheese. Carbon dioxide is injected in-line 78 following pasteurization and held to steady state 82 with the cream dressing. Carbon dioxide is also added as a purge and blanket for the holding tank 82, creamer 94 and packaging system 100.

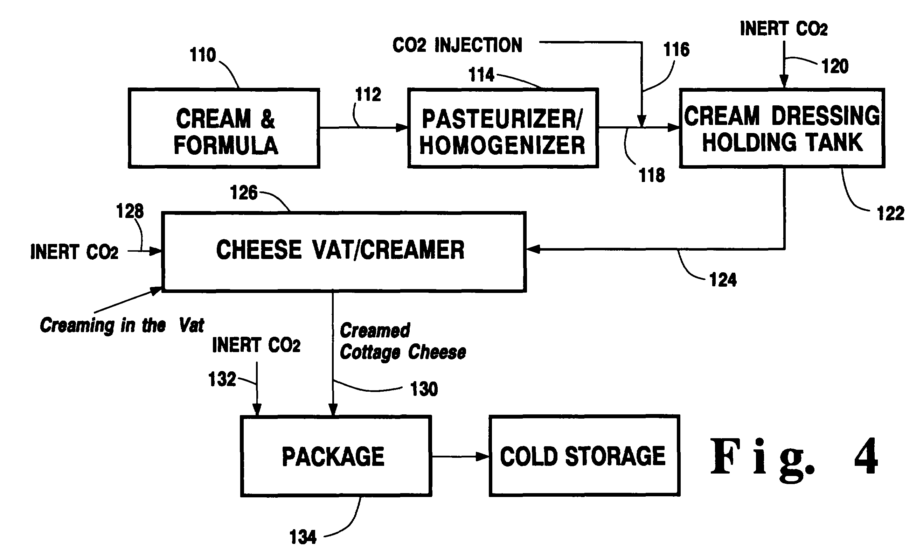

The present invention may also be conducted in an open vat system such as shown for a cottage cheese system as in Fig. 4. In such a process, cream and formula are supplied from storage vessel 110 and fed through line 112 to pasteurizer/homogenizer 114. Upon leaving the pasteurizer/homogenizer 114, CO₂ is injected via injector 116 into cream dressing line 118, where the CO₂ is mixed and dissolved into the cream dressing by action of the injector in the process stream. The cream/CO₂ solution flows from cream dressing line 118 into holding tank 122, where the solution is maintained under conditions suitable to achieve steady state between the cream dressing and the dissolved CO₂. Upon reaching steady state, the cream/CO₂ solution is transferred via transfer line 124 to cheese vat/creamer 126 in which the cheese curd is already prepared and stored. The cheese curd and cream/CO₂ solution are then blended to produce creamed cottage cheese that is transferred via output line 130 to packaging system 134. During packaging, CO₂ may be added to the headspace of the cottage cheese container(s). Before and subsequent to entering holding tank 122, vat/creamer 126 and packaging system 134, CO₂ is added via lines 120, 128 and 132, respectively, to purge and blanket the tank, vat/creamer and packaging system. Following packaging, containers of cottage cheese are transferred for cold storage or shipment.

The method of the present invention is further illustrated by the following examples. However, it is to be recognized that these examples are not intended to limit the scope of the present invention in any way.

### Examples

### Cottage Cheese Production

Cottage cheese is prepared by blending a homogenized and pasteurized cream dressing with a cheese curd that has been produced from pasteurized skim milk. A typical blend ratio is about 40% to about 45% cream dressing with about 55% to about 60% cheese curd. Cottage cheese products are classified primarily by curd size and by percent milkfat. Regular small curd cottage commonly has about 4% milkfat, low fat product has about 1 % to about 2 % milkfat, and non-fat product has less than about 1% milkfat.

In a closed creamer process, creamed cottage cheese is produced by starting with about 20,000 lbs. cream dressing and formula. The cream dressing is pumped through a HTST (high temperature, short time) pasteurizer, and then homogenized. Carbon dioxide is sparged at a specified rate, over the course of about 55 to about 60 minutes, into the homogenized cream dressing as it is pumped to a CO₂ purged storage vessel. Carbon dioxide headpressure is kept at about 3 to about 4 inches water column. The carbon dioxide sparged cream dressing is held in the storage vessel overnight. On the next day, 2500 lbs. of the cream dressing pumped into a CO₂ purged creamer and blended with 3900 lbs. of cheese curd for about 25 minutes. The product cottage cheese is then analyzed for final fat content and then pumped to product filling lines. The cottage cheese is packaged in HDPE (high density polyethylene) tubs with a metalized mylar inner seal and refrigerated at about 40°F.

### Example 1

Cottage cheese was prepared as described above, with carbon dioxide injected at 2 lbs. and 4 lbs. CO₂ per 1000 lbs. of cream dressing, for regular and low fat varieties. Table 1 shows processing parameters for each test, along with their results. Taste and appearance of the final product was tested one to two days after packaging, by measuring product pH, tastings ("sensory") and by observing the package inner seal for doming. Product pH was considered normal as long as it was between about pH 4.7 and about pH 6. Sensory determination were made based upon flavor changes with and without CO₂. Where no flavor change was detected, a notation of "clean" was listed. Package inner seals were inspected for effects; and where unaffected, an "intact" notation was listed. Carbon dioxide headspace was also measured. The shelf-life for control samples was shown to be about 21 days, while the shelf-life for cottage cheese sparged with 4 lbs. CO₂ per 1000 lbs. cream was at least about 45 days (the end-point of the test).

**Table 1**

| Treatment | Sparge level (lbs CO₂/1000 lbs cream) | Blanket Cream storage (100 SCHF CO₂/hr) | Blanket Blender (100 SCHF CO₂/hr) | pH cream @24hr hold | Product pH | Sensory | Package Inner Seal | % CO₂ (Gas Headspace by G.C.) |
|---|---|---|---|---|---|---|---|---|
| Regular, Control | 0 | NO | NO | ----- | ----- | clean | intact | ----- |
| Regular, CO₂ | 2 | YES | YES | 5.45 | 4.9 | clean | intact | 9.21% |
| Regular, CO₂ | 2 | YES | NO | 5.45 | 4.9 | clean | intact | 15.6% |
| Regular, CO₂ | 4 | YES | YES | 4.99 | 4.82 | clean | intact | 16.07% |
| Non-fat, Control | 0 | NO | NO | ------ | 5.14 | clean | intact | 1.83-5.06% |
| Non-fat, CO₂ | 2 | YES | YES | 5.15 | 4.89 | clean | intact | 17.73% |
| Non-fat, CO₂ | 4 | YES | YES | 5.06 | 4.84 | clean | intact | 19.67% |

### Example 2

Cottage cheese was prepared, as above, but without CO₂ purge and blanketing. The rate of carbon dioxide injection was 1.5 lbs. CO₂ per 1000 lbs. cream dressing. Results were measured on a microbiological basis. Controls showed positive microbial activity at about 23 to about 24 days, while treated product remained free of microbial activity (i.e., negative results) for the entire course of 47 days. The results are shown in Table 2.

**Table 2**

| Day Plated | Temp | Sample # | Microbiological Results | | |
|---|---|---|---|---|---|
| | | | Coli/gram | Y&M/gram | Psychs/gram |
| 0 days | Initial | Control | <5 | <5 | <10 |
| | Initial | Test* | <5 | <5 | <10 |
| 7 days | 3°C | Control | <5 | <5 | <10 |
| | | Test | <5 | <5 | <10 |
| | 6°C | Control | <5 | <5 | <10 |
| | | Test | <5 | <5 | <10 |
| 14 days | 3°C | Control | <5 | <5 | <10 |
| | | Test | <5 | <5 | <10 |
| | 6°C | Control | <5 | 350 (yeast) | <10 |
| | | Test | <5 | <5 | <10 |
| 21 days | 3°C | Control | <5 | <5 | <10 |
| | | Test | <5 | <5 | <10 |
| | 6°C | Control | <5 | <5 | <10 |
| | | Test | <5 | <5 | <10 |
| 27 days | 3°C | Control | <5 | <5 | <10 |
| | | Test | <5 | <5 | <10 |
| | 6°C | Control | <5 | 910 (mold) | <10 |
| | | Test | <5 | <5 | <10 |
| 30 days | 3°C | Control | <5 | <5 | <10 |
| | | Test | <5 | <5 | <10 |
| | 6°C | Control | <5 | 25 (mold) | <10 |
| | | Test | <5 | <5 | <10 |
| 34 days | 3°C | Control | <5 | TNTC (yeast) | <10 |
| | | Test | <5 | <5 | <10 |
| | 6°C | Control | <5 | <5 | <10 |
| | | Test | <5 | <5 | <10 |
| 37 days | 3°C | Test | <5 | <5 | <10 |
| | 6°C | Test | <5 | <5 | <10 |
| 41 days | 3°C | Test | <5 | <5 | |
| | 6°C | Test | <5 | <5 | |
| 47 days | 3°C | Test | <5 | <5 | |
| | 6°C | Test | <5 | <5 | |

| | | | | | |
|---|---|---|---|---|---|
| * Test indicates the average result of 3 sample tubs (each obtained from the Beginning, Middle and End of the Batch) | | | | | |

### Example 3

Cottage cheese was prepared, as above, and additionally with the filler hopper subject to carbon dioxide purge and blanketing. Carbon dioxide was also injected at rates of 2 lbs. and 4 lbs. CO₂ per 1000 lbs. cream dressing. Results are shown in Table 3, characterized in a manner similar to those shown in Example 1.

**Table 3**

| Treatment | Sparge level (lbs CO₂/1000 lbs cream) | Blanket Cream storage (100 SCHF CO₂/hr) | Blanket Blender (100 SCHF CO₂/hr) | Product pH Target: pH 4.9 | Sensory | Package Inner Seal | % CO₂ Gas Headspace by G.C.) |
|---|---|---|---|---|---|---|---|
| Regular, Control | 0 | NO | NO | 4.77 | clean | intact | 4.75% |
| Regular, CO₂ | 2 | YES | YES | 4.62 | clean | intact | 18.65% |
| Regular, CO₂ | 4 | YES | YES | 4.74 | clean | intact | 22,87% |

## Claims

1. A method for preparing a packaged dairy product having increased shelf-life, comprising the steps of:
(a) contacting a fluid milk fraction of a dairy foodstuff with carbon dioxide,
(b) mixing said fluid milk fraction and carbon dioxide into a solution, and
(c) subjecting said solution to conditions sufficient to achieve steady state between said fluid milk fraction and carbon dioxide,
and wherein steps (a) - (c) are conducted prior to packaging of said dairy foodstuff.

2. The method of claim 1 wherein at least one of steps (a) - (c) are conducted under a carbon dioxide blanket.

3. The method of claim 2 wherein said at least one of steps (a) - (c) include a carbon dioxide purge.

4. The method of claim 1 wherein each of steps (a) - (c) are conducted under a carbon dioxide blanket.

5. The method of claim 4 wherein said each of steps (a) - (c) include a carbon dioxide purge.

6. The method of claim 1 wherein steps (a) - (c) are within a dairy processing system, which includes pasteurization and homogenization, and wherein said carbon dioxide is contacted and mixed with said fluid milk fraction using an in-line injector or sparger immediately following said pasteurization and homogenization.

7. The method of claim 2 wherein steady state step (c) is conducted at about 35-50 °F for at least about 0.5 hours within a holding or surge tank.

8. The method of claim 2 wherein said carbon dioxide is mixed with said fluid milk fraction at a rate of at least about 0.1 lbs. CO₂ /1000 lbs. fluid milk fraction.

9. The method of claim 2 wherein said carbon dioxide blanket is maintained under a nominal positive pressure of about 3-5 inches of water column.

10. A method for preparing dairy products having a refrigerated shelf-life of about 45 days to about 60 days and clean non-acidic taste, comprising the steps of:
(a) pasteurizing and homogenizing a dairy foodstuff, and immediately thereafter,
(b) contacting a fluid milk fraction of said dairy foodstuff with carbon dioxide, and
(c) mixing said fluid milk fraction and carbon dioxide into a solution, and
(d) subjecting said solution, under a carbon dioxide blanket, to conditions sufficient to achieve steady state between said fluid milk fraction and carbon dioxide.
